# EUROPEAN PATENT SPECIFICATION

(11) **EP 3 829 250 B1**
(45) Date of publication and mention of the grant of the patent: **20.09.2023**
(21) Application number: 21153770.9
(22) Date of filing: 22.12.2009
(51) Int. Cl.: H04W 72/12, H04W 4/06, H04W 72/04, H04J 1/00, H04J 11/00, H04L 5/00

(54) **TRANSMISSION EQUIPMENT AND METHOD FOR SENDING CONTROL MESSAGES**
ÜBERTRAGUNGSVORRICHTUNG UND -VERFAHREN ZUR SENDUNG VON STEUERUNGSNACHRICHTEN
ÉQUIPEMENT DE TRANSMISSION ET PROCÉDÉ PERMETTANT D'ENVOYER DES MESSAGES DE COMMANDE

(30) Priority: 24.12.2008 JP 2008328294; 04.06.2009 JP 2009135324; 08.07.2009 JP 2009162071
(43) Date of publication of application: 02.06.2021
(62) Divisional of application: 09834426.0
(73) Proprietor: Panasonic Intellectual Property Corporation of America, Torrance, CA 90503 (US)
(72) Inventor: HUANG, Lei, 534415 Singapore (SG); YOSHII, Isamu, Osaka-shi, Osaka 540-6207 (JP); CHIEN, Koh Wei, Osaka-shi, Osaka 540-6207 (JP)
(74) Representative: Grünecker Patent- und Rechtsanwälte PartG mbB

(56) References cited:
- WO-A1-2006/039812
- Youngsoo Yuk, Youngseob Lee, Sang Gook Kim and Kiseon Ryu: "Subframe Control Channels of IEEE802.16m Systems", , 10 March 2008 (2008-03-10), XP002802535, Retrieved from the Internet: URL:http://grouper.ieee.org/groups/802//16 /tgm/contrib/C80216m-08_149.doc
- RELAY TASK GROUP OF IEEE 802 16: "Draft Amendment to IEEE Standard for Local and metropolitan area networks Part 16: Air Interface for Fixed and Mobile Broadband Wireless Access Systems Multihop Relay Specification ; P80216j_D7delta", IEEE DRAFT; P80216J_D7DELTA, IEEE-SA, PISCATAWAY, NJ USA, vol. 802.16, no. D7delta, 22 October 2008 (2008-10-22), pages 1-322, XP068048032,

## Description

### Technical Field

The present invention relates to a transmission apparatus and control information transmission method for transmitting control information for resource assignment in a multiple access wireless communication system.

### Background Art

Currently, wireless mobile communication systems are evolving towards the fourth generation (i.e. 4G networks). The evolution to 4G promises substantial increase in system requirements (e.g. an increase in the number of users, user bandwidths, and mobility).

Several new technologies are planning to be used to make possible this increase in system requirements. One of these technologies is orthogonal frequency division multiple access (OFDMA), which is a wireless technique proposed for WiMAX (IEEE 802.16e) and 3GPP LTE (Long Term Evolution).

The orthogonal frequency division multiplexing (OFDM) is a technique of multiplexing and transmitting transmission data using a plurality of subcarriers. In an OFDM system, first, a data stream is divided into several parallel sub-streams. The data rate then is lowered. That is to say, with these parallel substreams, the symbol duration increases compared to the original data stream. The plurality of parallel substreams are then modulated and later mapped on separate subcarriers.

The increased symbol duration improves the robustness of OFDM to channel delay spread. Furthermore, the introduction of cyclic prefixes (CPs) can completely eliminate inter-symbol interference as long as the CP duration is longer than the channel delay spread. In addition, OFDM modulation can be realized using the efficient inverse Fast Fourier transform (IFFT), which enables a large number of subcarriers to be provided with lower complexity.

In an OFDM communication system, resources are defined by means of OFDM symbols in the time domain or by means of subcarriers in the frequency domain. That is, OFDMA is a multiple-access scheme that makes possible multiplexing transmission by mapping data streams from a plurality of users upon time resources and frequency resources.

For example, non-patent literature 1 discloses a conventional wireless communication apparatus that communicates using an OFDM communication scheme.

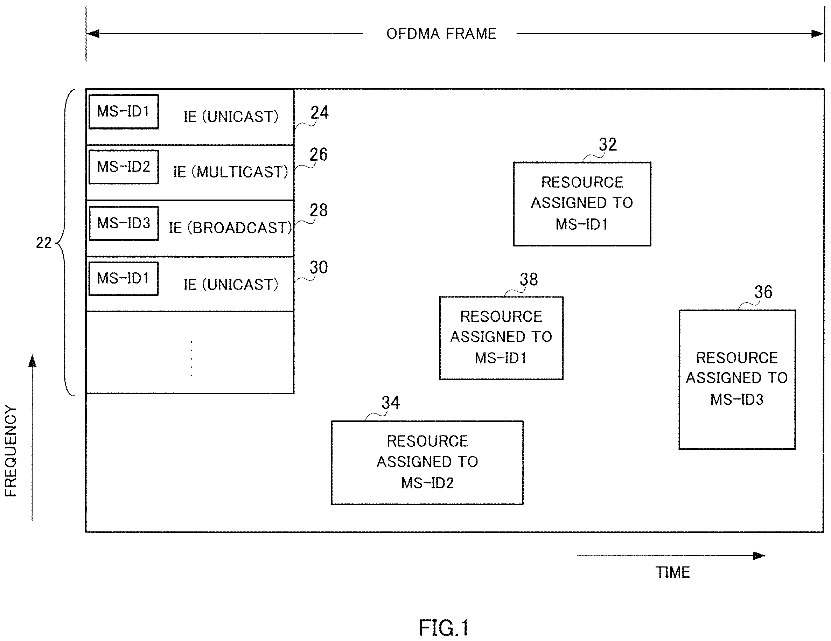

FIG.1 illustrates an example of an OFDMA frame structure. FIG.1 is an illustration of a downlink (DL) frame structure. Note that, although not shown in FIG.1, normally, there also is an uplink (UL) part as well.

With reference to FIG.1, the frame includes MAC control information 22 which carries control signal. The control signal includes, for example, scheduling information for DL data transmission, scheduling grants for UL transmission, and ACK/NACK indications in response to UL transmission. Generally, control signal is valid for the current frame only. There may, however, be additional modes of operation in which control signal is valid for multiple frames.

Control information 22 is broadcasted from a base station (BS) to all the mobile stations (MSs) connected to that BS. Each MS needs to receive and decode MAC control information 22 and then search for its own scheduling information unit in MAC control information 22. Typically, control information 22 is broadcasted with fixed timing with respect to the frame boundaries, usually near the beginning of frame.

With reference to FIG.1, control information 22 has a plurality of scheduling information units. Each scheduling information unit is formed with an information element (IE) including an MS-ID. Each IE corresponds to a specific MS or a group of a plurality of MSs (hereinafter simply "group"). The information included in an IE is essential to determine the data transmission format. The specification of the data transmission format by an MS (or group) is essential to identify the system resources scheduled for that MS (or group) and correctly demodulate in the identified system resources. For example, referring to FIG.1, the contents of IEs 24, 26, 28 and 30 are essential to correctly demodulate in resources 32, 34, 36 and 38, respectively.

Depending on the number of target MSs, IEs categorise into three types: unicast, multicast and broadcast. A unicast IE corresponds to a single MS, a multicast IE corresponds to a predetermined number of MSs (or group), and a broadcast IE corresponds to all MSs.

For example, like unicast IE 24 including MS-ID1, each unicast IE includes an MS-ID that uniquely identifies an MS. Some of unicast IEs may correspond to one MS in control information 22. For example, in FIG.1, two IEs 24 and 30 both correspond to the MS having MS-ID1.

Also, like multicast IE 26 including MS-ID2 and broadcast IE 28 including MS-ID3, each broadcast or multicast IE also includes an MS-ID that uniquely identifies a broadcast or multicast connection. Note that an MS has preliminarily knowledge of the group of MS-IDs for broadcast/multicast.

Each IE corresponds to a separate assignment resource area. That is, if the unit scale of assignment resource areas is determined, even when the first assignment resource area and a second assignment resource area are addressed to the same mobile station, separate IEs are provided for the first assignment resource area and the second assignment resource area, respectively. Also, this occurs at other times as well, including, for example, when the first assignment resource area and a second assignment resource area are not consecutive, when different services are applied to the first assignment resource area and a second assignment resource area, when different configuration conditions (for example, different modulation and coding schemes (MCSs)) are applied to the first assignment resource area and a second assignment resource area, and when the number of times of data retransmissions is different between the first assignment resource area and a second assignment resource area.

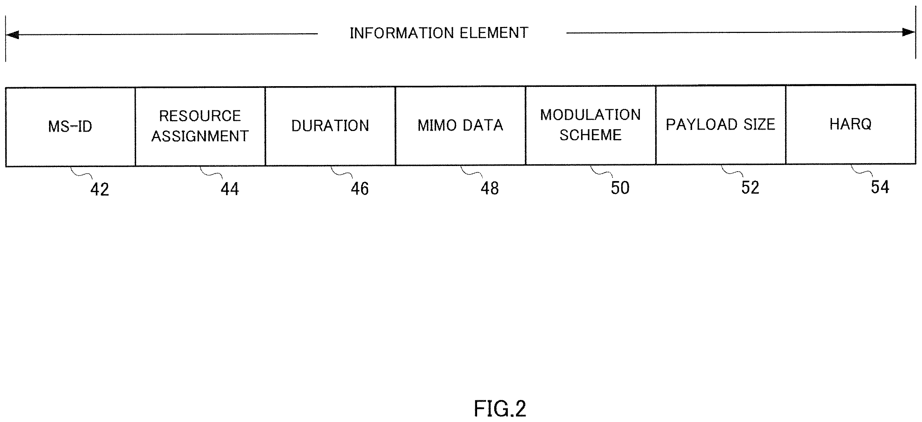

FIG.2 illustrates an exemplary IE structure on a DL. This DL IE includes a DL scheduling information unit to be used to notify an MS how to process data. In FIG.2, the IE includes MS-ID 42 which identifies the MS or group to which resource is assigned in the frame. Furthermore, the IE includes, as resource-related information, an indication (that is, resource assignment information 44) of specific resource that is assigned (e.g. time resource, frequency resource, space resource, or any combination of these), and time duration 46 in which this assignment of specific resource is valid. The IE also includes, as information related to the data transmission format, MIMO data 48 to indicate that the content depends on a particular MIMO scheme that is specified, modulation scheme information 50 to be applied to the assigned resource, payload size information 52, and HARQ information 54 to indicate the hybrid ARQ process of the current transmission.

In the above-described fashion, each MS or group is able to decode an IE included in MAC control information and identify the resource assigned to that MS or group according to the decoding result.

Additionally, WO 2006/039812 discloses a technique in which a mobile terminal in a wireless communication network may be one of several modes of operation. When in an idle mode, the mobile terminal may avoid a lengthy random access procedure normally associated with responding to a page from a base station, if the base station includes in the page an indication of a resource that the mobile terminal may utilize when responding to the page. Additionally, the mobile terminal may transmit an efficient location update MAC header to a base station, whether prompted to by a page from the base station or not. Furthermore, without leaving the idle mode or a sleep mode, the mobile terminal may exchange short data burst messages with a base station. Y. Yuk, et. al. s paper "Subframe Control Channels of IEEE802.16m Systems", part of the IEEE 802.16 Broadband Wireless Access Working Group project, covers the considerations about the downlink control signaling.

### Citation List

### Non-Patent Literature

NPL 1
IEEE Std 802.16e-2005

### Summary of Invention

### Technical Problem

Now, IEs in MAC control information are arranged in an arbitrary order, and there may be a plurality of IEs carrying the same MS-ID. Consequently, to find out the resource corresponding to its own MS-ID, an MS has to check all the IEs in MAC control information 22. This would result in the problems of increasing the processing time and power consumption in the MS .

It is therefore an object of the present invention to provide a transmission apparatus and control information transmission method to reduce the processing time and power consumption at the reception side by making the reception processing at the reception side efficient The present invention attains the above object by means defined in the independent claims. Other embodiments are claimed in the dependent claims.

### Solution to Problem

In an example useful for understanding the present invention a transmission apparatus transmits control information for resource assignment in a multiple access wireless communication system, and has: a structuring section that structures the control information; and a transmitting section that transmits the frame including the structured control information, and, in this transmission apparatus: the control information comprises a unicast area where a unicast scheduling information unit addressing one mobile station is placed, and a non-unicast area where a non-unicast scheduling information unit addressing two or more mobile stations is placed; and a scheduling information unit group to be placed in the unicast area comprises a scheduling information unit formed with one mobile station identifier, which is identification information of a mobile station, a plurality of information elements to be transmitted to the mobile station associated with the mobile station identifier, and information about the number of the plurality of information elements.

In another example useful for understanding the present invention, a transmission method transmits control information for resource assignment in a multiple access wireless communication system, and includes:a structuring step of structuring the control information; and a transmitting step of transmitting the frame including the structured control information, and, in this transmission method: the control information comprises a unicast area where a unicast scheduling information unit addressing one mobile station is placed, and a non-unicast area where a non-unicast scheduling information unit addressing two or more mobile stations is placed; and a scheduling information unit group to be placed in the unicast area comprises a scheduling information unit formed with one mobile station identifier, which is identification information of a mobile station, a plurality of information elements to be transmitted to the mobile station associated with the mobile station identifier, and information about the number of the plurality of information elements.

### Advantageous Effects of Invention

With the present invention, it is possible to reduce the processing time and power consumption at the reception side by making the reception processing at the reception side efficient.
Embodiments of the invention and examples useful for understanding the present invention are enumerated together in the following.

### Brief Description of Drawings

FIG.1 shows an example of an OFDM frame structure;
FIG.2 shows a typical structure of a downlink information element (IE);
FIG.3 is a block diagram showing a configuration of a base station according to example 1
FIG.4 is a block diagram showing a configuration of a mobile station according to example 1;
FIG.5 shows a control information structure according to example 1;
FIG.6 shows a control information structure according to example 2
FIG.7 shows a control information structure according to example 3
FIG.8 shows a control information structure according to example 4
FIG. 9 illustrates the system on which example 5 is based;
FIG.10 shows a control information structure according to example 5
FIG.11 shows a control information structure according to example 6
FIG.12 illustrates the system on which example 7 is based;
FIG.13 illustrates the system on which example 7 is based;
FIG.14 illustrates the system on which example 7 is based;
FIG.15 shows a control information structure according to example 7
FIG.16 illustrates processing in an information processing section;
FIG.17 shows a control information structure according to example 8 and
FIG.18 illustrates processing in an information processing section.

### Description of Embodiments and Examples

Now, embodiments and examples of the present invention will be described in detail below with reference to the accompanying drawings. Parts that are the same between embodimentsand examples will be assigned the same reference numerals and their descriptions will not be repeated.

### (Example 1)

### [Configuration of base station]

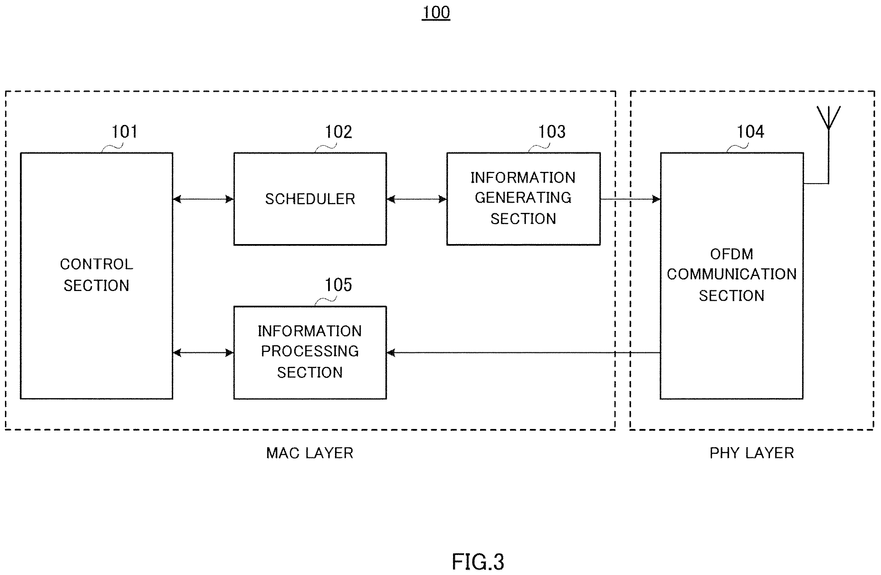

FIG.3 is a block diagram showing a configuration of base station 100 according to example 1. In FIG.3, base station 100 has control section 101, scheduler 102, information generating section 103, OFDM communication section 104, and information processing section 105. In this context, control section 101, scheduler 102, information generating section 103 and information processing section 105 perform MAC layer processing, and OFDM communication section 104 performs physical layer processing.

Control section 101 performs processing related to the MAC protocol.

Scheduler 102 assigns resources to a communicating party, which is mobile station 200 or a group comprised of a plurality of mobile stations 200, based on control by control section 101. Scheduler 102 outputs the MS-ID, which is identification information assigned to mobile station 200 or group, resource assignment information and cast identification information (information to identify between unicast, multicast and broadcast), to information generating section 103.

Information generating section 103 generates control information to be transmitted in a downlink using the information received from scheduler 102. The control information includes control signal. The control signal is, for example, scheduling information related to downlink data communication and scheduling information related to uplink data communication. Also, information generating section 103 assigns, to resource corresponding to a scheduling information, transmission data addressing the MS-ID associated with that scheduling information. To be more specific, a scheduling information unit includes an MS-ID and resource assignment information, so that transmission data addressing this MS-ID is mapped to a resource corresponding to this resource allocation information. In this way, a scheduling information unit included in control information and transmission data are associated with each other, so that, at the reception side, it is possible to receive and process the data addressing the receiving party based on information in the control information. The structure of control information to be generated in information generating section 103 will be later described in detail.

OFDM communication section 104 performs OFDM modulation and OFDM demodulation. OFDM communication section 104 transmits a frame including control information generated in information generating section 103.

Information processing section 105 analyzes uplink information transmitted from mobile station 200, and outputs the analysis result to control section 101.

### [Configuration of mobile station]

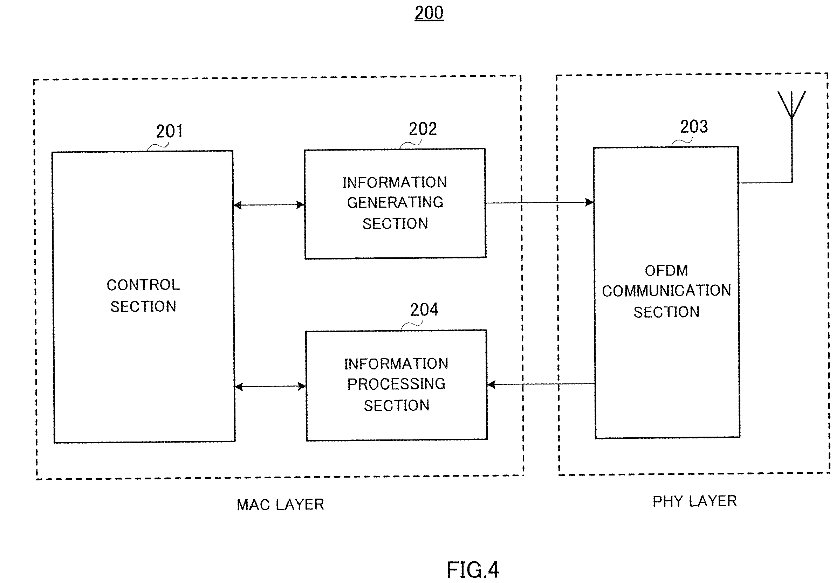

FIG. 4 is a block diagram showing a configuration of mobile station 200 according to example 1. Referring to FIG.4, mobile station 200 has control section 201, information generating section 202, OFDM communication section 203 and information processing section 204. In this context, control section 201, information generating section 202 and information processing section 204 perform processes related to the MAC layer, and OFDM communication section 203 performs processes related to the physical layer.

Control section 201 performs processes related to the MAC protocol.

Information generating section 202 generates information to be transmitted in an uplink based on control by control section 201. This information includes at leaset one of control information and transmission data.

OFDM communication section 203 performs OFDM modulation and OFDM demodulation.

Information processing section 204 analyzes downlink information transmitted from a communication party (base station 100) based on control by control section 201, and outputs the analysis result to control section 201. That is to say, information processing section 204 extracts, for example, a scheduling information unit related to downlink data communication and a scheduling information unit related to uplink data communication, and outputs these to control section 201.

### [Structure of control information]

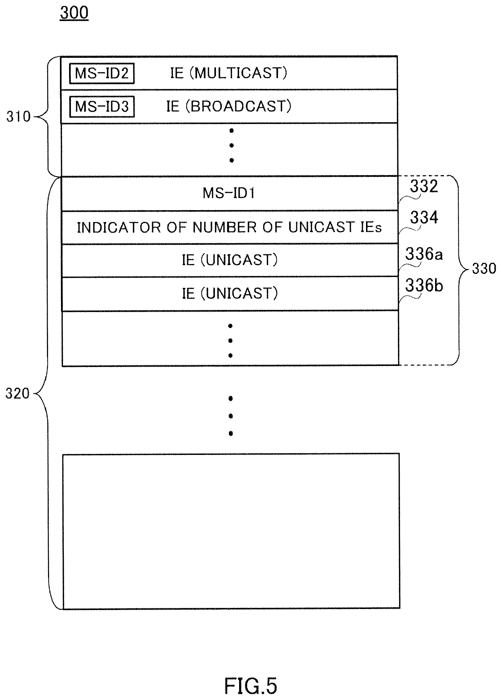

As described above, information generation section 103 generates control information to be transmitted in a downlink. FIG.5 shows a control information structure according to example 1.

In FIG.5, control information 300 is divided into multicast/broadcast zone 310 and unicast zone 320. Multicast/broadcast zone 310 and unicast zone 320 are formed with consecutive areas.

Multicast/broadcast zone 310 includes all of multicast scheduling information and broadcast scheduling information in the frame in which this control information is transmitted. In other words, multicast/broadcast zone 310 includes all multicast IEs and broadcast IEs in control information 300.

On the other hand, unicast zone 320 includes all the unicast scheduling information in the frame in which this control information is transmitted.

Unicast zone 320 has scheduling information unit 330 for each mobile station 200. Each scheduling information unit 330 includes area 332 for one MS-ID, area 334 for an indicator of the number of IEs, and areas 336 for IEs. The indicator of the number of IEs shows the number of IEs included in that scheduling information unit 330.

As for multicast IE and broadcast IE, every IE contains an MS-ID. This IE format will also be referred to as "first format" hereinafter. On the other hand, an MS-ID is not included in a unicast IE, and only one MS-ID is placed at the beginning of each mobile station assignment area 330. This IE format will also be referred to as "second format" hereinafter.

In this way, in unicast zone 320, scheduling information unit 330 is formed by placing, for one MS-ID, a plurality of unicast IEs together in one IE area 336. Consequently, once scheduling information unit 330 for mobile station 200 is found out, the unicast IEs for mobile station 200 are not present in other areas, so that mobile station 200 at the reception side is able to finish the process of searching for the areas assigned to mobile station 200 at the time of finding out scheduling information unit 330 for mobile station 200. As a result, compared to the prior art which has heretofore necessitated a search of whole control information, it is possible to reduce the time for the scheduling information unit search process, and, in accordance with this, reduce the power consumption of mobile station 200.

Also, an MS-ID is not included in a unicast IE but is situated in the beginning area of each scheduling information unit 330. By this means, even when a plurality of IEs are included in scheduling information unit 330, unlike the prior art which has heretofore included an MS-ID in each unicast IE, it is possible to reduce the signaling overhead.

### (Example 2)

With example 2, a unicast zone is divided into a plurality of partial zones depending on the number of IEs. The configurations of the base station and mobile station according to embodiment 2 are the same as base station 100 and mobile station 200 according to example 1.

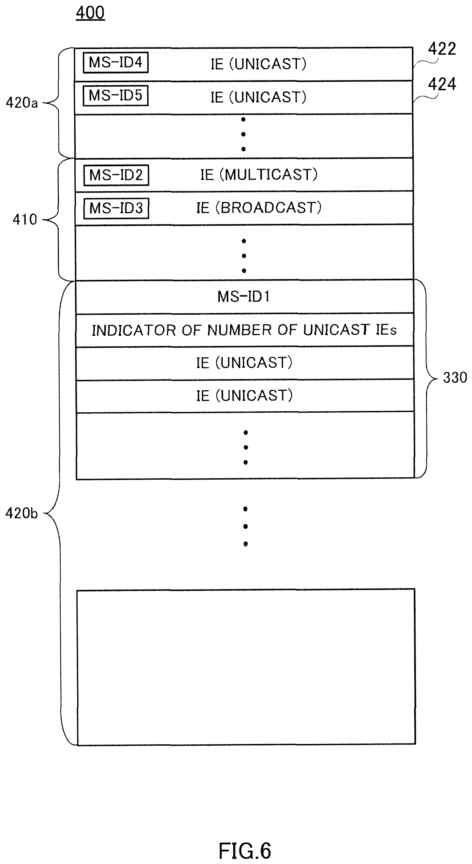

Information generation section 103 generates control information to be transmitted in a downlink. FIG.6 shows a control information structure according to embodiment 2.

In FIG.6, control information 400 is divided into multicast/broadcast zone 410 and unicast zones 420.

Also, in FIG.6, unicast zones 420 are divided into two partial zones -- first unicast zone 420a and second unicast zone 420b.

In the frame in which control information 400 is transmitted, first unicast zone 420a includes a scheduling information unit for mobile station 200, which one unicast IE addresses. The unicast IEs to be mapped in first unicast zone 420a include MS-IDs respectively (see unicast IEs 422 and 424 in FIG.6). That is to say, first unicast zone 420a employs the first format.

On the other hand, in the frame in which control information 400 is transmitted, second unicast zone 420b includes a scheduling information unit for mobile station 200, which a plurality of unicast IEs address. Similar to example 1, the unicast IEs to be mapped in second unicast zone 420b do not include MS-IDs, and only one MS-ID is situated in the beginning area of each scheduling information unit 330. That is to say, second unicast zone 420b employs the second format.

As described above, by thus providing first unicast zone 420a for mapping only a scheduling information unit which obviously has only one IE, an indicator of the number of IEs is not necessary in this area. By this means, it is possible to reduce signaling overhead.

Also, multicast/broadcast zone 410 is provided between first unicast zone 420a and second unicast zone 420b. That is to say, multicast/broadcast zone 410 forms the border between first unicast zone 420a and second unicast zone 420b. By this means, mobile station 200 at the reception side is able to readily identify the end of first unicast zone 420a and the beginning of second unicast zone 420b using multicast/broadcast zone 410 as a landmark.

Note that, in addition to multicast/broadcast zone 410, it is also possible to provide a zone to include an IE for special use (e.g. ranging IE) with a predetermined MS-ID, and use this zone as a unicast zone terminal signal.

Also, the order of first unicast zone 420a and second unicast zone 420b may be reversed to place second unicast zone 420b in the front and first unicast zone 420a in the back. However, such order needs to be determined in advance.

### (Example 3)

Similar to embodiment 2, embodiment 3 also divides a unicast zone into a plurality of partial zones depending on the number of IEs. The configurations of the base station and mobile station according to embodiment 3 are the same as base station 100 and mobile station 200 according to example 1.

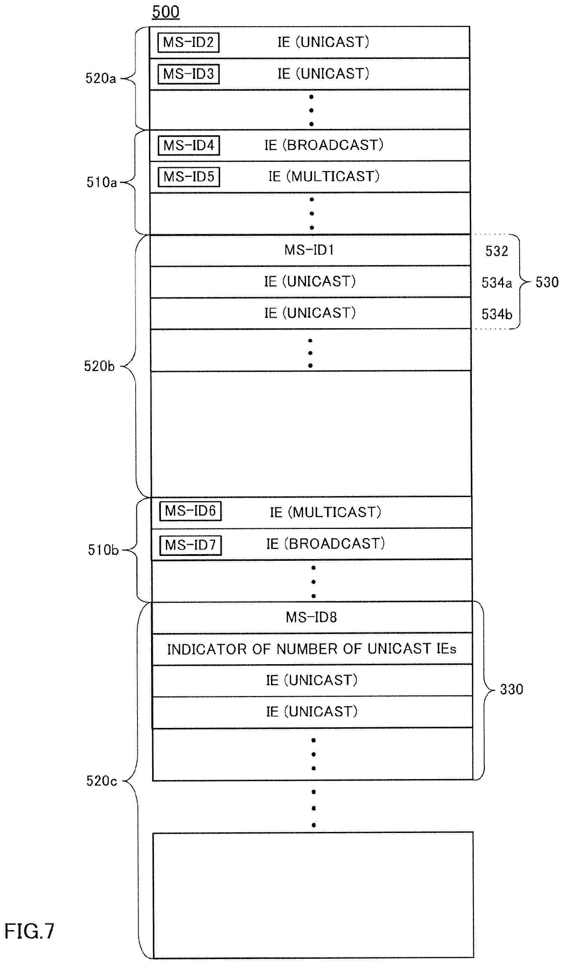

Information generation section 103 generates control information to be transmitted in a downlink. FIG.7 shows a control information structure according to embodiment 3.

In FIG.7, control information 500 is divided into multicast/broadcast zones 510 and unicast zones 520.

Also, in FIG.7, unicast zones 520 are divided into three partial zones -- first unicast zone 520a, second unicast zone 520b and third unicast zone 520c.

Similar to first unicast zone 420a described with embodiment 2, in the frame in which control information 500 is transmitted, first unicast zone 520a includes a scheduling information unit for mobile station 200, which one unicast IE addresses.

Also, in the frame in which control information 500 is transmitted, second unicast zone 520b includes a scheduling information unit for mobile station 200, which two unicast IEs address. Seocond unicast zone 520b includes scheduling informaitn unit 530 for each mobile station 200. Similar to scheduling information unit 330, scheduling information unit 530 includes area 532 for one MS-ID and area 534 for IE. However, unlike scheduling information unit 330, scheduling information unit 530 does not include an indicator of the number of IEs. Similar to first unicast zone 520a, informaitn about the number of IEs is associated with second unicast zone 520b itself, and so it is not even necessary to include an indicator of the number of IEs. By this means, it is possible to reduce signaling overhead.

Also, in the frame in which control information 500 is transmitted, third unicast zone 520c includes a scheduling information unit for mobile station 200, which equal to or more than three unicast IEs address.

By thus providing three unicast zones, mobile station 200 at the reception side is able to further narrow the areas in which mobile station 200 has to search for its own MS-ID, so that, as a result, it is possible to further reduce the processing time and power consumption of mobile station 200.

Also, multicast/broadcast zones 510 are divided into first multicast/broadcast zone 510a and second multicast/broadcast zone 510b. First multicast/broadcast zone 510a and second multicast/broadcast zone 510b are provided between first unicast zone 520a and second unicast zone 520b and between second unicast zone 520b and third unicast zone 520c, respectively.

By this means, mobile station 200 at the reception side is able to readily identify the beginning and end of unicast zones 520 using multicast/broadcast zone 510 as a landmark.

Note that, in addition to first multicast/broadcast zone 510a and second multicast/broadcast zone 510b, it is also possible to provide a zone to include an IE for special use (e.g. ranging IE) with a predetermined MS-ID, and use this zone as a unicast zone terminal signal.

Also, the order of first unicast zone 520a, second unicast zone 520b and third unicast zone 520c may be reordered. However, the order needs to be determined in advance.

### (Embodiment 4)

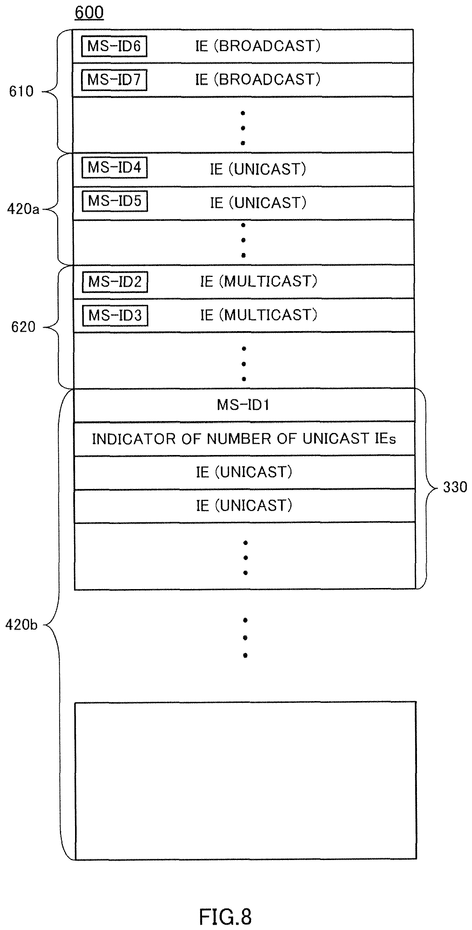

With embodiment 4, unlike embodiment 2 and embodiment 3, a multicast/broadcast zone is divided into multicast zones and broadcast zones. Information generation section 103 generates control information to be transmitted in a downlink. FIG. 8 shows a control information structure according to embodiment 4.

Referring to FIG.8, control information 600 is divided into broadcast zone 610, multicast zone 620 and unicast zones 420.

Broadcast zone 610 is present at the beginning of control information 600. By this means, it is possible to provide an information structure that complies with a protocol that requires placing broadcast scheduling information in the beginning area of control information (e.g. IEEE 802.16e).

Also, multicast zone 620 is present between first unicast zone 420a and second unicast zone 420b. By this means, mobile station 200 at the reception side is able to readily identify the end of first unicast zone 420a and the beginning of second unicast zone 420b using multicast zone 620 as a landmark.

Also, no area where broadcast zone and multicast zone are present together is provided, broadcast zone 610 and multicast zone 620 are each provided as an independent zone. By this means, the load of the process of zone search in mobile station 200 at the reception side is reduced. That is to say, if, for example, an address notation complies with IPv4, the last eight bits in a broadcast IP address becomes all 1's and the first 4 bits in a multicast IP address become 1110. Consequently, when broadcast zone and multicast zone are present together in the same area, mobile station 200 might be able to identify between broadcast and multicast only upon looking at the first four bits or the last eight bits. Meanwhile, if a broadcast zone and a multicast zone are separated and their order is determined as with the present embodiment, it is possible to reduce the load of the process of zone search in mobile station 200 by first carrying out a search by focusing on a characteristic point of an IP address of the zone to show up first and then switching that characteristic point to search for to that of the other zone.

### (Example 5)

With embodiments 2 to 4, a non-unicast zone is arranged between the first unicast zone and the second unicast zone. By this means, a mobile station at the reception side is able to readily identify the end of the first unicast zone and the beginning of the second unicast zone using the non-unicast zone as a landmark.

The present example presumes using control information having a different structure from those of embodiments 2 to 4.

### [Conventional system as precondition]

Unlike the system explained in the background art part, with this system, there are cases where an MS-ID is not reported expressly and a CRC (Cyclic Redundancy Check) part is masked by multiplying the CRC part included in each IE by an MS-ID. A mobile station at the reception side decodes an IE and calculates an exclusive OR of the CRC part using its own MS-ID. If the CRC check result is "OK," the mobile station determines that the IE addresses itself, and receives data using that IE. The mobile station then has to try decoding all the IEs to look for an IE addressing itself.

Furthermore, in this system, a plurality of resource sizes and MCSs (Modulation and Coding Schemes) are prepared each, to report an IE to a mobile station. For example, two resource sizes (1 MLRU (MAP Logical Resource Unit) and 2 MLRU) and two MCSs (QPSK 1/2 and QPSK 1/8) are prepared. Then, the combination of resource size and MCS to be applied to an IE may be changed per destination mobile station, based on propagation path conditions.

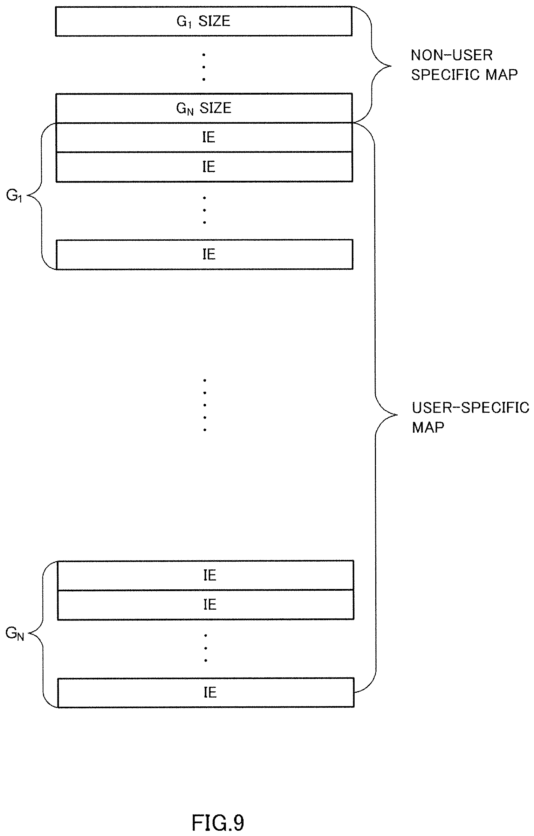

Also, there are four kinds of combinations of resource size and MCS in the above-described example, so that, in control information, IEs are sorted in four groups and included and furthermore the number of IEs is included per group (see FIG.9, which illustrates a case where there are N types of groups). By this means, a mobile station to receive control information is able to reduce the number of times the mobile station has to try performing decoding in order to look for an IE addressing the mobile station.

However, as shown in FIG.9, IEs are placed in the area referred to as "user specific MAP" and the numbers of IEs per group are placed in the area referred to as "non-user specific MAP." Consequently, by providing this non-user specific MAP, compared to the system described in the background part, this system has the problems of increasing the overhead and decreasing the total throughput.

### [Configurations of base station and mobile station according to example 5]

The base station and mobile station according to embodiment 5 have the same basic configurations as base station 100 and mobile station 200 according to example 1.

Information generating section 103 generates control information to be transmitted in a downlink. To be more specific, information generating section 103 first groups IEs based on the IE type. The IE type refers to, for example, the combination of resource size and MCS. Information generating section 103 separates an assignment area per group and places IEs in control information. Furthermore, in an assignment area for an arbitrary group, information generating section 103 separates a unicast IE assignment area and a non-unicast IE assignment area and places IEs.

### [Structure of control information]

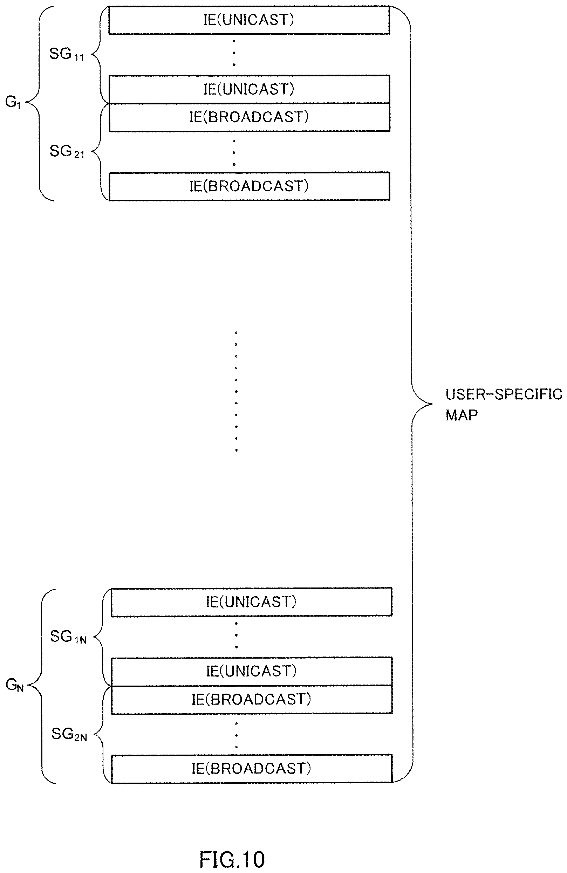

FIG.10 shows a structure of control information according to example 5. In FIG.10, the IEs are arranged in the order of group 1 (G₁) , ..., group N(G_{N}), and included in control information. Also, in an assignment area for an arbitrary group, IEs are placed in the order of a unicast IE and then a broadcast IE (which is a kind of a non-unicast IE). That is to say, in an arbitrary group, a unicast IE forms one subgroup (SG) and a non-unicast IE forms the other subgroup.

As described above, according to the present example, control information has an IE assignment area per group corresponding to the IE type. In each group's IE assignment area, a unicast IE assignment area and a non-unicast IE assignment area are separated and arranged in a given order.

By this means, a non-unicast IE assignment area of the first group or a second group is provided between a unicast IE assignment area of the first group and a unicast IE assignment area of the second group. Consequently, a mobile station at the reception side is able to readily identify the end of a unicast IE assignment area of the first group and the beginning of a unicast IE assignment area of a second group using a non-unicast IE assignment area as a landmark. That is to say, by adopting this control information structure, unlike the conventional system such as described earlier, it is not necessary to provide a non-user specific MAP and therefore is possible to reduce overhead.

### (Example 6)

A case has been assumed with example 5 where a non-unicast IE is included in each group. By contrast with this, example 6 is directed to a control information structure in the event there is a group not containing a non-unicast IE. The basic configuration of the base station and mobile station according to example 6 are the same as in example 5.

Similar to example 5, information generating section 103 generates control information to be transmitted in a downlink. To be more specific, information generating section 103 first groups IEs based on the IE type. Then, information generating section 103 separates an assignment area per group and places IEs in control information. Furthermore, in an assignment area for an arbitrary group, information generating section 103 separates a unicast IE assignment area and a non-unicast IE assignment area and places IEs.

Furthermore, information generating section 103 places information about the number of unicast IEs of groups not including non-unicast IEs, in a non-user specific MAP. Also, information generating section 103 places information about groups not including non-unicast IEs in a non-user specific MAP. This group-related information is provided in, for example, bitmap format.

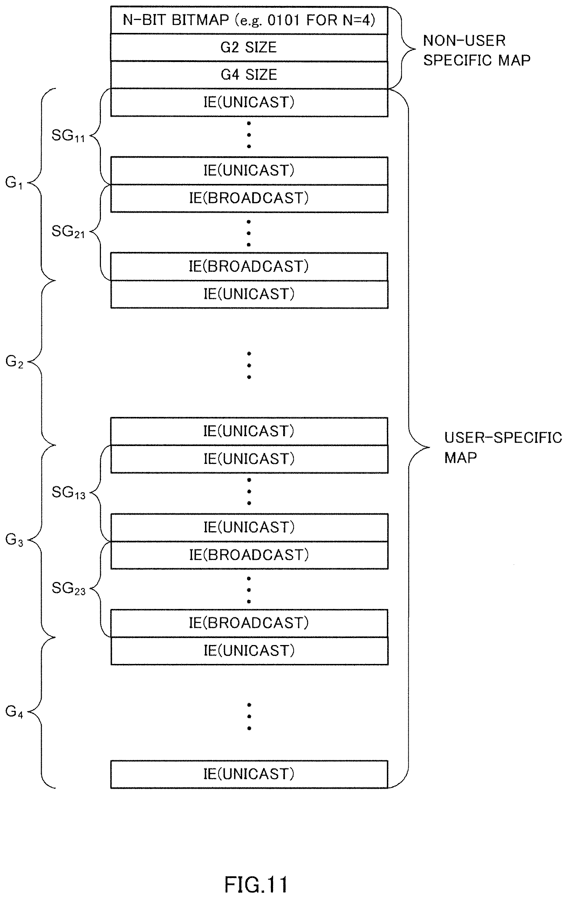

FIG.11 shows a control information structure according to example 6. FIG.11 shows a control information structure in the event N is 4. In FIG.11, G₂ and G₄ do not include non-unicast IEs. Consequently, information related to groups not including non-unicast IEs is placed in the non-user specific MAP. In this context, whether or not a non-unicast IE is present in an arbitrary group is represented by the bit value 1 or 0. There are four groups in this context, so a bit map is comprised of four constituent bits. When the k-th constituent bit in the bit map is associated with group k, if G₂ and G₄ do not include non-unicast IEs, the bit map is formed with a bit sequence of 0101.

By this means, even when there is a group not including a non-unicast IE, a mobile station at the reception side is able to readily identify the beginning and end of each group's assignment area. Also, given that only information about the number of IEs for groups not including non-unicast IEs is placed in the non-user specific MAP, it is possible to reduce the overhead compared to the conventional system described in example 5. Also, compared to the conventional system described above with example 5, although information about groups not including non-unicast IEs needs to be provided additionally, the number of bits is just the same as the number of groups, and this has little impact on the increase of overhead.

### (Example 7)

The present example presumes that a base station transmits a signal using a plurality of carriers.

### [Conventional system of precondition]

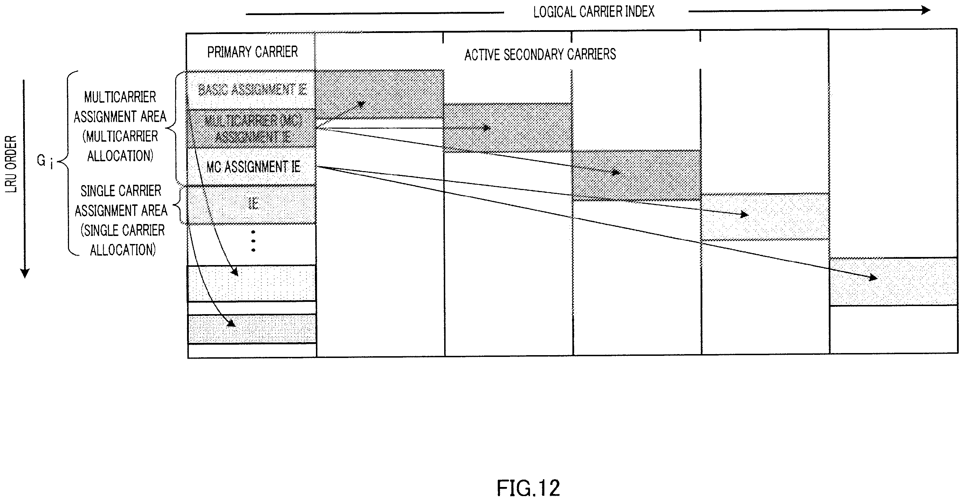

In this system, for example, as shown in FIG.12, a base station transmits a signal using a plurality of carriers. The plurality of carriers include a primary carrier and secondary carriers. All control information is transmitted using the primary carrier. Then, control information for the primary carrier is reported as a basic assignment IE, while control information for the secondary carriers is reported as an MC assignment IE. Basic assignment IE and MC assignment IE are transmitted as one set by a primary carrier.

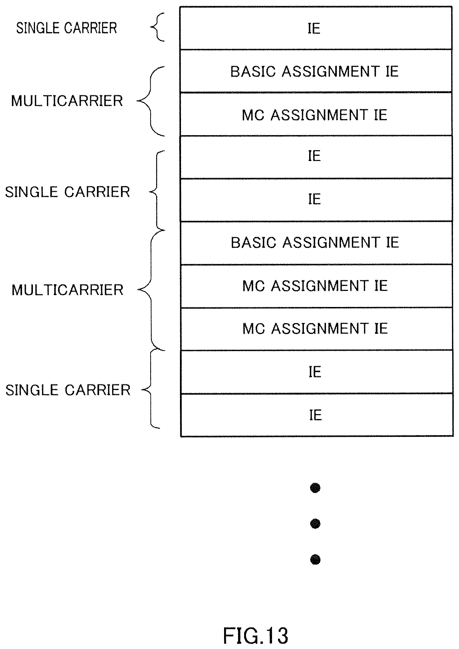

By this means, the primary carrier transmits all the single carrier IEs and multicarrier IEs. In this case, as shown in FIG.13, single carrier IEs and multicarrier IEs are transmitted randomly. Consequently, when this information structure is adopted, even when a signal for a given mobile station is transmitted by single carrier, it is still necessary to decode all the IEs.

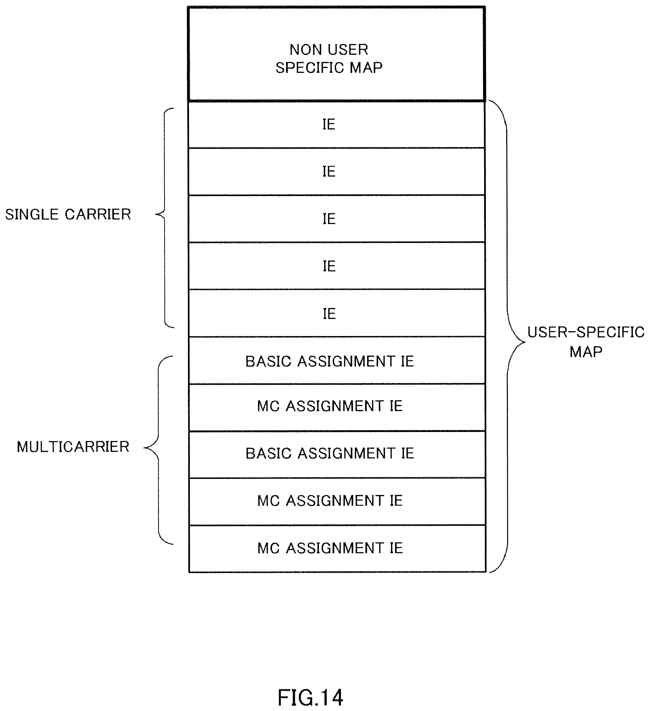

To reduce the load of a mobile station at the reception side, for example, it is possible to adopt the control information structure shown in FIG.14. That is to say, in the area called "user specific MAP," which is different from the area called "non-user specific MAP," a single carrier IE arrangement area and a non-single carrier IE arrangement area are placed apart. The number of IEs and the like are placed in the non-user specific MAP.

By this means, when a signal addressing a given mobile station is transmitted by single carrier, that mobile station has only to decode single carrier IEs and therefore is able to reduce the number of attempts to search for IEs addressing that mobile terminal.

However, by providing this non-user specific MAP, compared to the system described in the background part, this system has the problems of increasing the overhead and decreasing the total throughput.

### [Configuration of base station and mobile station according to example 7]

The base station and mobile station according to example 7 have the same basic configurations as base station 100 and mobile station 200 according to example 1.

Information generating section 103 generates control information to be transmitted in a downlink. To be more specific, information generating section 103 first groups IEs based on the IE type. In this context, the IE type refers to, for example, the combination of the type of single carrier or multicarrier and the type of unicast IE or non-unicast IE. Information generating section 103 separates an assignment area per group and places IEs in control information. Furthermore, in an assignment area of a group of the single carrier type, information generating section 103 separates a unicast IE assignment area and a non-unicast IE assignment area and places IEs.

### [Structure of control information]

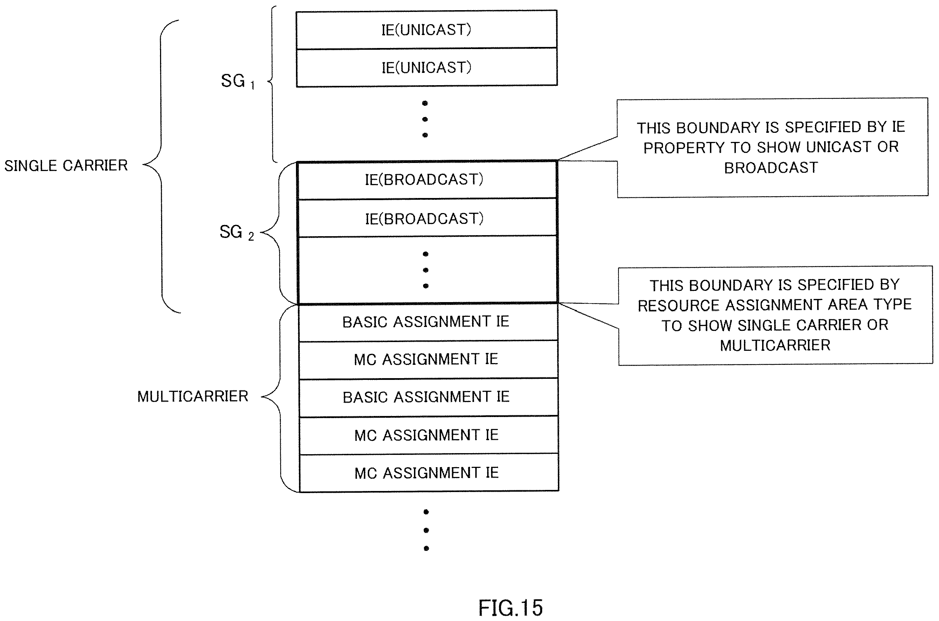

FIG.15 shows a control information structure according to example 7. In FIG.15, the IEs are arranged in the order of a single carrier group and then a multicarrier group, and included in control information. Also, in an assignment area for a single carrier group, IEs are placed in the order of a unicast IE and then a broadcast IE (which is a kind of a non-unicast IE). That is to say, in a single carrier group, a unicast IE forms one subgroup (SG) and a non-unicast IE forms the other subgroup. The IEs here include both a basic assignment IE and a non-basic assignment IE. A basic assignment IE is an information element for a regular data channel. A non-basic assignment IE is, for example, a group-specific information element, an IE for reporting a group-specific information element component, and an IE for a channel other than a regular data channel such as persistent allocation.

### [Receiving processing in mobile station]

Control information structured as described above is transmitted from base station and received in mobile station 200.

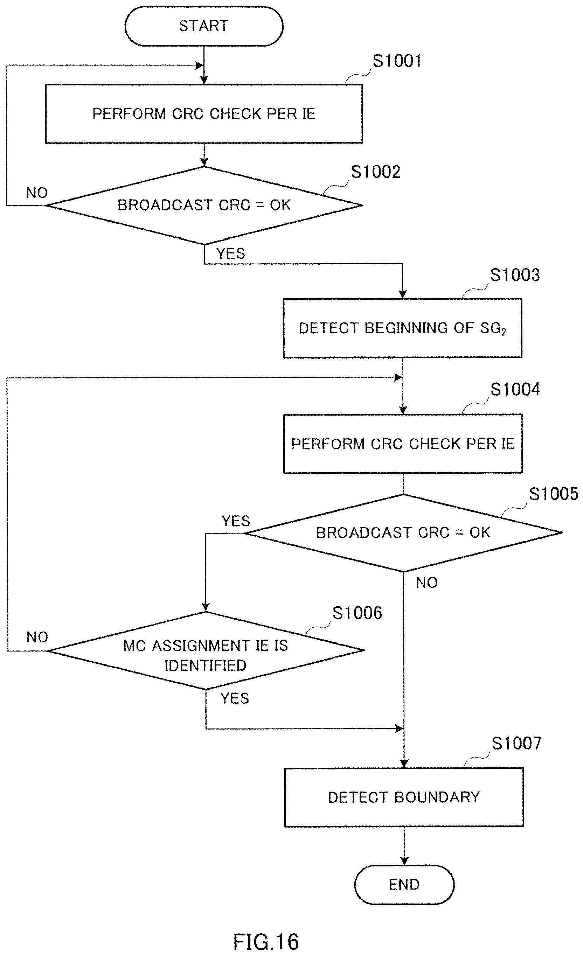

FIG.16 illustrates processing in information processing section 204.

In step S1001, information processing section 204 performs a CRC check per control information IE.

In step S1002, when a CRC check result is determined to be "OK" ("YES") as a result of demasking the CRC part using broadcast identification information, this IE is detected as the beginning of an area where a single carrier and broadcast IE group is placed (that is, SG₂ in FIG.15) (step S1003). If the CRC check result is determined to be "NG" ("NO"), the process of step S1001 is repeated.

In step S1004, a CRC check for a subsequent IE is performed.

In step S1005, when a CRC check result is determined to be "NG" ("NO") as a result of demasking the CRC part using broadcast identification information, this IE is detected as the beginning of an area where a multicarrier IE group is placed (step S1007).

In step S1005, when a CRC check result is determined to be "OK" ("YES") as a result of demasking the CRC part using broadcast identification information, whether or not this IE is a multicarrier assignment IE is decided (step S1006).

When a multicarrier assignment IE is identified (step S1006: "YES"), this IE is identified as the beginning of the area where a multicarrier IE group is placed (step S1007). If an IE is identified not to be a multicarrier assignment IE (step S1006: "NO"), the process of step S1004 is repeated.

As described above, according to the present example, control information has an IE assignment area per group corresponding to the IE type. In an assignment area for a single carrier group, a unicast IE assignment area and a non-unicast IE assignment area are separated and arranged in a given order.

By this means, a non-unicast IE assignment area of a single carrier group is provided between a unicast IE assignment area of a single carrier group and an IE assignment area of a multicarrier group. Consequently, a mobile station at the reception side is able to readily identify the end of a unicast IE assignment area of a single carrier group and the beginning of an IE assignment area of a multicarrier group using a non-unicast IE assignment area of a single carrier group as a landmark. That is to say, by adopting this control information structure, unlike the conventional system such as described earlier, it is not necessary to provide a non-user specific MAP and therefore is possible to reduce overhead.

### (Example 8)

With example 7, a mobile station detects the first "basic assignment IE" in a multicarrier group and by this means identifies the border between a single carrier group and a multicarrier group. The criterion for detecting the first "basic assignment IE" in a multicarrier group is, for example, whether or not an IE subject to detection is a broadcast IE or a multicarrier assignment IE. Whether or not an IE that is subject to detection is a multicarrier assignment IE is useful when the basic assignment IE placed at the beginning of a multicarrier group is a broadcast IE.

By contrast with this, with the present example, in a single carrier group assignment area, an IE that is a non-basic assignment IE and that is also a broadcast IE is assigned immediately before a multicarrier group allocation area. By this means, switch from a non-basic assignment IE to a basic assignment IE can be used as the criterion for detecting the first "basic assignment IE" in a multicarrier group.

### [Configuration of base station and mobile station according to example 8]

The base station and mobile station according to example 8 have the same basic configurations as base station 100 and mobile station 200 according to example 1.

Information generating section 103 generates control information to be transmitted in a downlink. To be more specific, information generating section 103 first groups IEs based on the IE type. In this context, the IE type refers to, for example, the combination of the type of single carrier or multicarrier, the type of unicast IE or non-unicast IE, and the type of basic assignment or non-basic assignment. Information generating section 103 separates an assignment area per group and places IEs in control information. Furthermore, in an assignment area of a group of the single carrier type, information generating section 103 separates an IE that is non-basic assignment and that is a non-unicast IE assignment area, and other assignment areas, and places IEs.

### [Structure of control information]

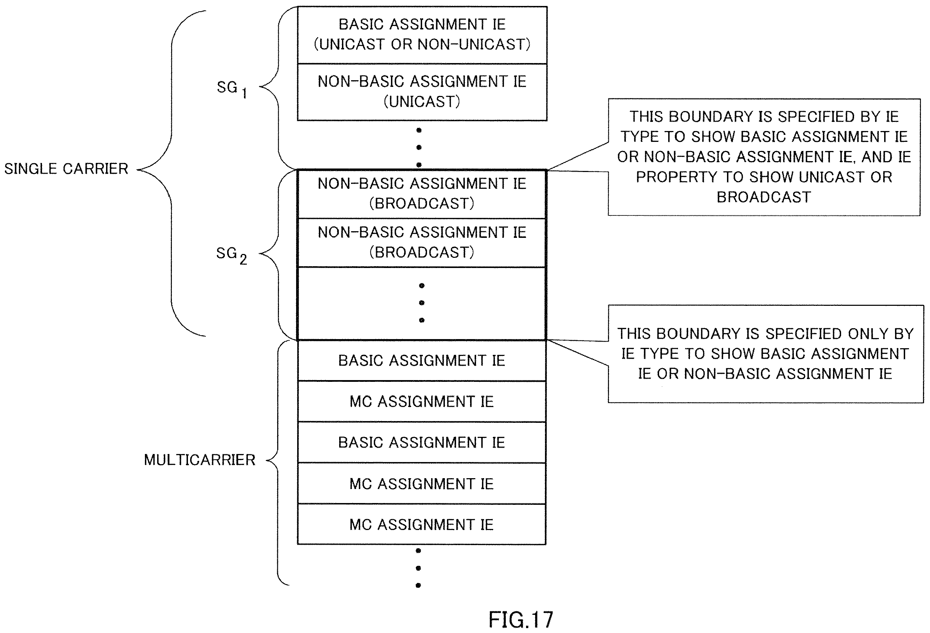

FIG.17 shows a structure of control information according to example 8. In FIG.17, the IEs are arranged in the order of a single carrier group and then a multicarrier group, and included in control information. Also, in an assignment area for a single carrier group, IEs are placed in the order of a basic assignment IE (both a unicast IE and a non-unicast IE), a non-basic assignment and unicast IE, and then a non-basic assignment and broadcast IE. That is to say, in a single carrier group, a non-basic assignment, non-unicast IE forms the subgroup to be placed immediately before a multicarrier group. Furthermore, in an arbitrary set as described above, IEs are placed in the order of a basic assignment IE and then a non-basic assignment IE. That is to say, at the beginning of an assignment area of the multicarrier group type, information generating section 103 places a basic assignment IE.

### [Receiving processing at mobile station]

Control information structured as described above is transmitted from base station 100 to mobile station 200.

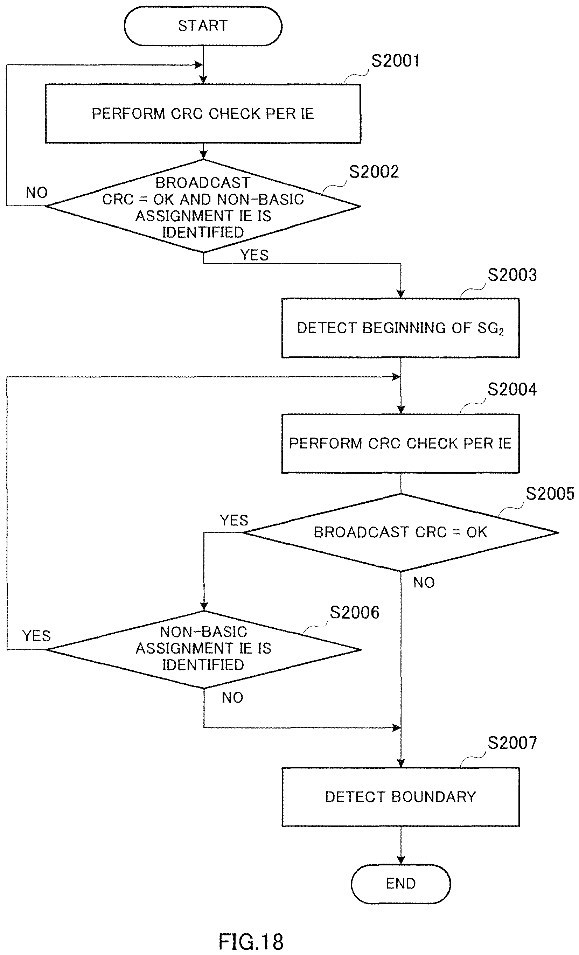

FIG.18 illustrates processing in information processing section 204.

In step S2001, information processing section 204 performs a CRC check per control information IE.

In step S2002, when a CRC check result is determined to be "OK" as a result of demasking the CRC part of a check target IE using broadcast identification information and the check target IE is identified to be a non-basic assignment IE ("YES"), the check target IE is detected as the beginning of an area where a non-basic assignment and non-unicast IE group is placed (that is, SG₂ in FIG.17) (step S2003). If the CRC check result is determined to be "NG" ("NO"), the process of step S2001 is repeated.

In step S2004, a CRC check for a subsequent IE is performed.

In step S2005, when a CRC check result is determined to be "NG" ("NO") as a result of demasking the CRC part of a check target IE using broadcast identification information, the check target IE is detected as the beginning of an area where a multicarrier IE group is placed (step S2007).

When the CRC check result is determined to be "OK" (step S2005: "YES"), whether or not the check target IE is a non-basic assignment IE is decided (step S2006).

If the check target IE is identified not to be a non-basic assignment IE (step S2006: "NO"), this check target IE is detected as the beginning of an area where a multicarrier IE group is placed (step S2007). If the check target IE is identified to be a non-basic assignment IE (step S2006: "YES"), the process of step S2004 is repeated.

### (Other examples and embodiments)

(1) In example 1 through 3, multicast/broadcast zone 310, multicast/broadcast zone 410 and multicast/broadcast zone 510 are areas where multicast and broadcast IEs are present together. However, the present invention is by no means limited to this, and it is equally possible to divide multicast/broadcast zone 310, multicast/broadcast zone 410, and multicast/broadcast zone 510 each into a multicast zone and a broadcast zone. By this means, similar to embodiment 4, it is possible to reduce the load of zone search process in mobile station 200 at the reception side.
   In particular, in the event a broadcast zone is placed at the beginning of multicast/broadcast zone 310 as with the case with embodiment 1, by placing a broadcast zone at the beginning in multicast/broadcast zone 310, it is possible, like embodiment 4, to provide a information structure that complies with a protocol that requires placing broadcast scheduling information in the beginning area of control information (e.g. IEEE 802.16e).
(2) With embodiment 3, multicast/broadcast zone 510, which is an area where multicast and broadcast IEs are present together, is placed between unicast zones. However, the present invention is by no means limited to this, and it is equally possible to provide a broadcast zone in the place of multicast/broadcast zone 510a and place a multicast zone in the place of multicast/broadcast zone 510b. By this means, too, it is possible, like embodiment 4, to reduce the load of zone search process in mobile station 200 at the reception side.

Also, although cases have been described with the above example as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

### Industrial Applicability

The transmission apparatus and control information transmission method of the present invention are suitable for use to reduce processing time and power consumption at the reception side by making the receiving processes at the reception side more efficient.

## Claims

1. A communication apparatus (100) comprising:
a receiver adapted to receive a control message including an unicast resource assignment information and multicast resource assignment information,
a part of the unicast resource assignment information is mapped to a first zone (420b, 520b) and the multicast resource assignment information is mapped to a second zone (410, 510a, 620); and
a processing section adapted to process a data message based on the control message **characterized in that**
a remaining part of the unicast resource assignment information is mapped to a third zone (420a, 520a);
the first zone (420b, 520b) including a plurality of unicast Information Elements, IE;
the second zone (410, 510a, 620) including a plurality of multicast lEs;
the third zone (420a, 520a) including another plurality of unicast IEs; and
the third zone (420a, 520a), the second zone (410, 510a, 620) and the first zone (420b, 520b) are located in a frequency domain in this order.

2. The communication apparatus according to claim 1, wherein
the unicast IEs are grouped together based on a format of the unicast IE, such that a first group with a first format of the unicast IE is present in the first zone (420b, 520b) and a second group with a second format of the IE is present in the third zone (420a, 520a).

3. The communication apparatus according to claim 1 or 2, wherein
each of the plurality of unicast IEs is intended for one mobile station of the plurality mobile stations, and the first zone (420b, 520b) further includes an identifier for identifying the one mobile station.

4. The communication apparatus according to claims 1 to 3, wherein
each of the other plurality of unicast IEs includes an identifier for identifying a corresponding one mobile station.

5. The communication apparatus according to claims 1 to 4, wherein
broadcast resource assignment information corresponding to all of mobile stations is mapped to a fourth zone, and the fourth zone is located before the third zone (420a, 520a).

6. A communication method comprising:
receiving a control message including an unicast resource assignment information and multicast resource assignment information,
a part of the unicast resource assignment information is mapped to a first zone (420b, 520b) and the multicast resource assignment information is mapped to a second zone (410, 510a, 620); and
processing a data message based on the control message **characterized in that**
a remaining part of the unicast resource assignment information is mapped to a third zone (420a, 520a);
the first zone (420b, 520b) including a plurality of unicast Information Elements, IE;
the second zone (410, 510a, 620) including a plurality of multicast lEs;
the third zone (420a, 520a) including another plurality of unicast IEs; and
the third zone (420a, 520a), the second zone (410, 510a, 620) and the first zone (420b, 520b) are located in a frequency domain in this order.

7. The communication method according to claim 6, wherein
the unicast IEs are grouped together based on a format of the unicast IE, such that a first group with a first format of the unicast IE is present in the first zone (420b, 520b) and a second group with a second format of the IE is present in the third zone (420a, 520a).

8. The communication method according to claim 6 or 7, wherein
each of the plurality of unicast IEs is intended for one mobile station of the plurality mobile stations, and the first zone (420b, 520b) further includes an identifier for identifying the one mobile station.

9. The communication method according to claims 6 to 8, wherein
each of the other plurality of unicast IEs includes an identifier for identifying a corresponding one mobile station.

10. The communication method according to claims 6 to 9, wherein
broadcast resource assignment information corresponding to all of mobile stations is mapped to a fourth zone (610), and the fourth zone is located before the third zone (420a, 520a).

## Patentansprüche

1. Kommunikationsvorrichtung (100), mit:
einem Empfänger, der ausgebildet ist, eine Steuerungsnachricht mit einer Unicast-Ressourcenzuweisungsinformation und einer Multicast-Ressourcenzuweisungsinformation zu empfangen,
wobei ein Teil der Unicast-Ressourcenzuweisungsinformation auf eine erste Zone (420b, 520b) abgebildet wird und die Multicast-Ressourcenzuweisungsinformation auf eine zweite Zone (410, 510a, 620) abgebildet wird; und
einem Verarbeitungsabschnitt, der ausgebildet ist, eine Datennachricht auf der Grundlage der Steuerungsnachricht zu verarbeiten,
**dadurch gekennzeichnet, dass**
ein verbleibender Teil der Unicast-Ressourcenzuweisungsinformation auf eine dritte Zone (420a, 520a) abgebildet wird;
die erste Zone (420b, 520b) mehrere Unicast-Informationselemente, IE, enthält;
die zweite Zone (410, 510a, 620) mehrere Multicast-IEs enthält;
die dritte Zone (420a, 520a) mehrere weitere Unicast-IEs enthält; und
die dritte Zone (420a, 520a), die zweite Zone (410, 510a, 620) und die erste Zone (420b, 520b) in dieser Reihenfolge in einem Frequenzbereich liegen.

2. Kommunikationsvorrichtung nach Anspruch 1, wobei
die Unicast-IEs auf der Grundlage eines Formats der Unicast-IE als Gruppe zusammengefasst sind, derart, dass eine erste Gruppe mit einem ersten Format der Unicast-IE in der ersten Zone (420b, 520b) vorhanden ist und eine zweite Gruppe mit einem zweiten Format der IE in der dritten Zone (420a, 520a) vorhanden ist.

3. Kommunikationsvorrichtung nach Anspruch 1 oder 2, wobei
jedes der mehreren Unicast-IEs für eine einzelne Mobilstation der mehreren Mobilstationen vorgesehen ist, und die erste Zone (420b, 520b) ferner eine Kennung zur Kennzeichnung der einen Mobilstation enthält.

4. Kommunikationsvorrichtung nach Anspruch 1 bis 3, wobei
jedes der mehreren anderen Unicast-IEs eine Kennung zur Kennzeichnung einer entsprechenden einzelnen Mobilstation enthält.

5. Kommunikationsvorrichtung nach Anspruch 1 bis 4, wobei
Rundrufressourcenzuweisungsinformation, die allen Mobilstationen entspricht, auf eine vierte Zone abgebildet ist und die vierte Zone vor der dritten Zone (420a, 520a) liegt.

6. Kommunikationsverfahren, mit:
Empfangen einer Steuerungsnachricht mit einer Unicast-Ressourcenzuweisungsinformation und einer Multicast-Ressourcenzuweisungsinformation,
wobei ein Teil der Unicast-Ressourcenzuweisungsinformation auf eine erste Zone (420b, 520b) abgebildet wird und die Multicast-Ressourcenzuweisungsinformation auf eine zweite Zone (410, 510a, 620) abgebildet wird; und
Verarbeiten einer Datennachricht auf der Grundlage der Steuerungsnachricht,
**dadurch gekennzeichnet, dass**
ein verbleibender Teil der Unicast-Ressourcenzuweisungsinformation auf eine dritte Zone (420a, 520a) abgebildet wird;
die erste Zone (420b, 520b) mehrere Unicast-Informationselemente, IE, enthält;
die zweite Zone (410, 510a, 620) mehrere Multicast-IEs enthält;
die dritte Zone (420a, 520a) mehrere weitere Unicast-IEs enthält; und
die dritte Zone (420a, 520a), die zweite Zone (410, 510a, 620) und die erste Zone (420b, 520b) in dieser Reihenfolge in einem Frequenzbereich liegen.

7. Kommunikationsverfahren nach Anspruch 6, wobei
die Unicast-IEs auf der Grundlage eines Formats der Unicast-IE derart als Gruppe zusammengefasst werden, dass eine erste Gruppe mit einem ersten Format der Unicast-IE in der ersten Zone (420b, 520b) vorhanden ist und eine zweite Gruppe mit einem zweiten Format der IE in der dritten Zone (420a, 520a) vorhanden ist.

8. Kommunikationsverfahren nach Anspruch 6 oder 7, wobei
jedes der mehreren Unicast-IEs für eine einzelne Mobilstation der mehreren Mobilstationen vorgesehen ist, und die erste Zone (420b, 520b) ferner eine Kennung zur Kennzeichnung der einzelnen Mobilstationen enthält.

9. Kommunikationsverfahren nach Anspruch 6 bis 8, wobei
jedes der mehreren weiteren Unicast-IEs eine Kennung zur Kennzeichnung einer entsprechenden einzelnen Mobilstation enthält.

10. Kommunikationsverfahren nach Anspruch 6 bis 9, wobei
eine Rundrufressourcenzuweisungsinformation, die allen Mobilstationen entspricht, auf eine vierte Zone (610) abgebildet wird und die vierte Zone vor der dritten Zone (420a, 520a) liegt.

## Revendications

1. Appareil de communication (100) comprenant :
un récepteur adapté pour recevoir un message de commande comprenant des informations d'affectation de ressources de monodiffusion et des informations d'affectation de ressources de multidiffusion,
une partie des informations d'affectation de ressources de monodiffusion est mise en correspondance avec une première zone (420b, 520b) et les informations d'affectation de ressources de multidiffusion sont mises en correspondance avec une deuxième zone (410, 510a, 620) ; et
une section de traitement adaptée pour traiter un message de données sur la base du message de commande
**caractérisé en ce que**
une partie restante des informations d'affectation de ressources de monodiffusion est mise en correspondance avec une troisième zone (420a, 520a) ;
la première zone (420b, 520b) comprenant une pluralité d'éléments d'information, IE, de monodiffusion ;
la deuxième zone (410, 510a, 620) comprenant une pluralité d'lE de multidiffusion ;
la troisième zone (420a, 520a) comprenant une autre pluralité d'lE de monodiffusion ; et
la troisième zone (420a, 520a), la deuxième zone (410, 510a, 620) et la première zone (420b, 520b) sont situées dans un domaine de fréquences dans cet ordre.

2. Appareil de communication selon la revendication 1, dans lequel
les IE de monodiffusion sont regroupés sur la base d'un format de l'IE de monodiffusion, de sorte qu'un premier groupe avec un premier format de l'IE de monodiffusion soit présent dans la première zone (420b, 520b) et qu'un deuxième groupe avec un deuxième format de l'IE soit présent dans la troisième zone (420a, 520a).

3. Appareil de communication selon la revendication 1 ou 2, dans lequel
chacun de la pluralité d'IE de monodiffusion est destiné à une station mobile de la pluralité de stations mobiles, et la première zone (420b, 520b) comprend en outre un identifiant pour identifier la station mobile.

4. Appareil de communication selon les revendications 1 à 3, dans lequel
chacun de l'autre pluralité d'IE de monodiffusion comprend un identifiant pour identifier une station mobile correspondante.

5. Appareil de communication selon les revendications 1 à 4, dans lequel
des informations d'affectation de ressources de radiodiffusion correspondant à toutes les stations mobiles sont mises en correspondance avec une quatrième zone, et la quatrième zone est située avant la troisième zone (420a, 520a).

6. Procédé de communication comprenant :
recevoir un message de commande comprenant des informations d'affectation de ressources de monodiffusion et des information d'affectation de ressources de multidiffusion,
une partie des informations d'affectation de ressources de monodiffusion est mise en correspondance avec une première zone (420b, 520b) et les informations d'affectation de ressources de multidiffusion sont mises en correspondance avec une deuxième zone (410, 510a, 620) ; et
traiter un message de données sur la base du message de commande
**caractérisé en ce que**
une partie restante des informations d'affectation de ressources de monodiffusion est mise en correspondance avec une troisième zone (420a, 520a) ;
la première zone (420b, 520b) comprenant une pluralité d'éléments d'information, IE, de monodiffusion ;
la deuxième zone (410, 510a, 620) comprenant une pluralité d'IE de multidiffusion ;
la troisième zone (420a, 520a) comprenant une autre pluralité d'IE de monodiffusion ; et
la troisième zone (420a, 520a), la deuxième zone (410, 510a, 620) et la première zone (420b, 520b) sont situées dans un domaine de fréquences dans cet ordre.

7. Procédé de communication selon la revendication 6, dans lequel
les IE de monodiffusion sont regroupés sur la base d'un format de l'IE de monodiffusion, de sorte qu'un premier groupe avec un premier format de l'IE de monodiffusion soit présent dans la première zone (420b, 520b) et qu'un deuxième groupe avec un deuxième format de l'IE soit présent dans la troisième zone (420a, 520a).

8. Procédé de communication selon la revendication 6 ou 7, dans lequel
chacun de la pluralité d'IE de monodiffusion est destiné à une station mobile de la pluralité de stations mobiles, et la première zone (420b, 520b) comprend en outre un identifiant pour identifier la station mobile.

9. Procédé de communication selon les revendications 6 à 8, dans lequel
chacun de l'autre pluralité d'IE de monodiffusion comprend un identifiant pour identifier une station mobile correspondante.

10. Procédé de communication selon les revendications 6 à 9, dans lequel
des informations d'affectation de ressources de radiodiffusion correspondant à toutes les stations mobiles sont mises en correspondance avec une quatrième zone (610), et la quatrième zone est située avant la troisième zone (420a, 520a).
